# EUROPEAN PATENT SPECIFICATION

(11) **EP 2 204 030 B1**
(45) Date of publication and mention of the grant of the patent: **03.08.2011**
(21) Application number: 08806257.5
(22) Date of filing: 15.09.2008
(51) Int. Cl.: H04L 29/06, H04L 12/58

(54) **TRANSMISSION OF MESSAGES**
ÜBERTRAGUNG VON NACHRICHTEN
TRANSMISSION DE MESSAGES

(30) Priority: 30.10.2007 EP 07254288
(43) Date of publication of application: 07.07.2010
(73) Proprietor: BRITISH TELECOMMUNICATIONS public limited company, London EC1A 7AJ (GB)
(72) Inventor: JOVER APARICIO, Fernando, Suffolk IP3 8AW (GB)
(74) Representative: Semos, Robert Ernest Vickers
(86) International application number: PCT/GB2008/003100
(87) International publication number: WO 2009/056786

(56) References cited:
- US-A1- 2006 190 533
- VAN DER MERWE A ET AL: "Phishing in the System of Systems Settings: Mobile Technology" SYSTEMS, MAN AND CYBERNETICS, 2005 IEEE INTERNATIONAL CONFERENCE ON WAIKOLOA, HI, USA 10-12 OCT. 2005, PISCATAWAY, NJ, USA,IEEE, vol. 1, 10 October 2005 (2005-10-10), pages 492-498, XP010873873 ISBN: 978-0-7803-9298-4
- TALLY G ET AL: "Anti-Physhing - Best Practices for Institutions and Consumers" INTERNET CITATION, [Online] XP002340219 Retrieved from the Internet: URL:http://www.antiphishing.org/sponsors_t echnical_papers/Anti-Phising_Be st_Practices_for_Institutions_Consumer0904 .pdf> [retrieved on 2005-08-09]

## Description

The present invention is concerned with message verification. One form of electronic fraud, known as phishing, involves sending to a victim a message that appears to be, but is not, from a respectable organisation, often a bank. The message, asks the victim to contact the organisation, typically visiting an internet page, or making a telephone call where he is asked for personal information such as account numbers and passwords that would be useful to the fraudster. Of course, the address or telephone number given is not that of the genuine organisation. One popular form of phishing, now that many mobile phones offer internet access, is to sent the phishing message using the Short Message Service (SMS).

There is thus a need for a method of protecting users from spoofed SMS or other messages that could be malicious. Such SMS messages could be asking for their credit card numbers, on line bank account and password, or to dial a phone number to provide these details.

In US patent application US2007/028105, a client device that receives a message containing a URL of a page that the user of the client device may access can send the URL to a central computing system; the computing system then consults a table of URLs and returns an associated password which the user can compare to see if it matches with a password stored locally in the client device. This system however requires that the user has a pre-existing relationship with the sender so that this password may be agreed in advance. US 2006/190533 is background art with respect to integrity and origin verification for messages.

The present invention is defined in the claims.

Some embodiments of the invention will now be described, by way of example, with reference to the accompanying drawings, in which :
Figure 1 is a block diagram of a telecommunications system;
Figure 2 is a flowchart illustrating the operation of one embodiment of the invention;
Figure 3 shows the structure of an SMS message;
Figure 4 shows the architecture of the server 6 of Figure 1; and
Figure 5 is a diagram showing the flow of messages during the process of Figure 2.

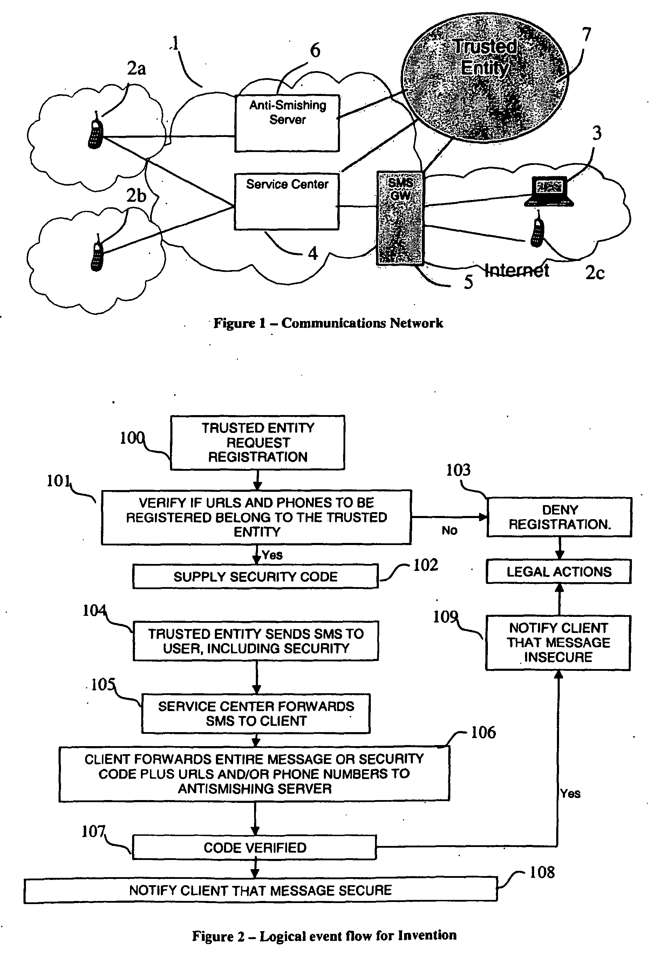

Figure 1 shows a communications system according to an embodiment of the invention comprising a plurality of networks within which client devices and servers are located. In the example the networks are GSM mobile telephone networks. The main components of the networks, such as base stations, switching centres and so forth are conventional and not shown in the drawing. Client devices connected to the network may include mobile telephones 2a, 2b, 2c and/or computer terminals such as the one shown at 3. The example upon which the description will be based assumes that the messages that clients wish to send to each other use the SMS protocol. For this purpose one or more short message service centres (SMSC) 4 are connected to the network.

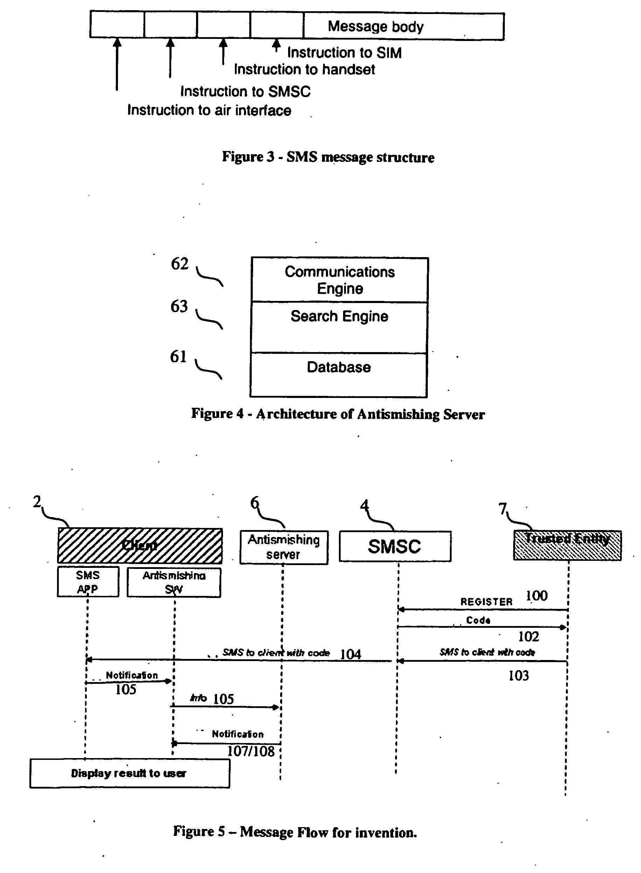

Also connected to the network is an anti-smishing server 6. The operation of this server will now be described with reference to the flowchart of Figure 2, the block diagram of Figure 4 and the message flow diagram of the whole process, presented in Figure 5.

It is supposed that entities 7 (only one of which is shown in the drawing), which can be a user with access to the network via a suitable terminal device, or a fully or partially automated system connected to the network, wishes to end an SMS message to one of the clients 2, 3.

Each entity that wishes to include Internet URLs or phone numbers in its messages is required to register with the AntiSmishing service. Thus, at Step 100 an entity 7 sends to the antismishing server 6 a message requesting registration. As well as identifying the entity, this request specifies one or more telecommunications addresses such as URLs or telephone numbers that are to be registered to that entity. Then (101) there is an authentication step. This is not essential from a technical point of view, but is highly desirable from a security viewpoint. Its purpose is to prevent registration by fraudsters. One possible approach is to check (automatically) the identity of the entity against a list of trusted entities already registered, and/or to refer the registration request to a human operator who may verify the identity of the entity. An alternative approach is (as shown) simply to verify that the URL or telephone number-given does actually belong to the entity making the request. This could be done manually or be automated if an appropriate list is available; for example a phone number could be checked against a telephone directory database.

On successful registration the server 6 allocates a unique "Security code" to the trusted entity 7. This code could be any number, character string or combination of both. During this process, the required URLs and phone numbers are be stored in a database 61, against that specific security code. If verification is successful, the originating entity 7 is sent (Step 102) a reply message containing the security code; otherwise the process terminates (103

When a Trusted entity (that is, an entity that appears in the database and whose URLs and phone numbers are included in the Antismishing database) desires to send a SMS message, the application program used by the entity includes the security code within the message. The security code may be included in the header (maybe as part of the instructions to the handset) or the body of the message. (See Figure 3). At step 104, the entity 7 sends the message to the desired recipient.

105 Eventually the message will arrive at the SMSC 4, which will forward the message to the recipient: for the purposes of description we suppose that this is the mobile client telephone 2b.

106 As the message is opened, a small application program running on the client looks for the security code, where expected. As an example it could be the first 8 bytes of the message body. After that, the application program searches the whole body of the message, storing any numbers following the phone format and any URLs, for example by searching for relevant text strings such as "www", ".com", ".uk". The application program sends these details to the antismishing server 6 , via an SMS message or any other available protocol such as TCP/IP. Alternatively, the application may forward the whole SMS message to the Antismishing server for it to look for the security code, URLs and/or phone numbers. This also would help to take some computational load off the phone, if needed.

107 Once the server 6 has the security code and the address(es) (phone number(s) and/or URL(s)) included in the message it will search its database 61. It retrieves all phone numbers and URLs stored for that security code and compares them with those in the message. The Architecture of the Antismishing server is depicted in Figure 4. As well as the database 61 used to store the Trusted entities, their security codes and any phone numbers and URLs registered by these entities, it also comprises a communications module 62 to send/receive messages containing the security codes and phone numbers/URLs, and confirmation of verifications. It also has a search engine 63 to find the data in the message.

If the address, or as the case may be, each of the addresses, contained in the message matches one of those in the database entry, the server 6 then notifies (108) the client 2b, that the message has been successfully verified. Otherwise it sends (109) a reply to the effect that the message is insecure. The application program running on the device 2b might have several options for the user. If the user wants to do so it might block the SMS messages from being displayed until they are verified. Optionally the SMS message may be displayed and the application would alert the user that the message has not been verified yet, asking the user whether to do this or not. If the user wants to do this the application will do so. The process of verification, in this case, might be presented to the user as an additional service in which the user might have to pay for any required verification. If desired the program might bar access to the address until verification is successful, or alternatively display a warning if the user attempts to access it before verification..

Additionally, the application program might contain some database to store, locally at the client, security codes along with the corresponding phone numbers and/or URLs already verified, thereby permitting the verification process in subsequent messages coming from the same Trusted entity to be performed locally

If desired, all messages may be encrypted using any known methods so that communications are not tampered with.

As described above, the registration process 100-103 and the verification process 103-108 are performed on the same server; however, if preferred they could be performed separately by a registration server and verification server, with access to a common database located in one or other server or separately.

## Claims

1. A method of verifying messages sent over a telecommunications system in which:
a) a sending station (7) transmits to a registration station (6) a registration request including a telecommunications address for later use;
b) the registration station (6) allocates a security code to the address, stores a database entry containing the address and security code and sends the security code to the sending station (7);
c) the sending station (7) sends to a receiving station (2) a message containing the telecommunications address and the security code;
d) the receiving station (2) sends to a verification station (6) a verification request containing the telecommunications address and the security code;
e) the verification station (6) determines whether there is a database entry that matches the telecommunication address and security code and if so, sends a clearance notification to the receiving station (2).

2. A method according to any one of the preceding claims in which the system is a mobile telephone network.

3. A method according to any one of the preceding claims in which the receiving station is a telephone.

4. A method according to claim 1 or 2 in which the receiving station is a computer terminal.

5. A method according to any one of the preceding claims in which the message is a text message.

6. A method according to any one of the preceding claims in which the telecommunications address is a telephone number.

7. A method according to any one of claims 1 to 5 in which the telecommunications address is an address of data stored at a remote server.

8. A method according to any one of the preceding claims in which the registration station and verification station are one and the same station.

9. A method according to any one of the preceding claims in which the receiving station extracts from the message the telecommunications address and the security code and includes them in the verification request.

10. A method according to any one of claims 1 to 8 in which the receiving station includes a copy of the message in the verification request.

11. A method according to any one of the preceding claims in which the receiving station displays the message only after it has received a clearance notification.

12. A method according to any one of claims 1 to 10 in which the receiving station displays the message, but permits the initiation if communication with a station corresponding to the telecommunications address only after it has received a clearance notification.

13. A method according to any one of claims 1 to 10 in which the receiving station displays the message, but responds to an attempt by a user of the receiving station to establish communication with a station corresponding to the telecommunications address in the absence of a clearance notification by displaying a warning.

14. A telecommunications system comprising:
(i) a sending station (7) operable (a) to transmit to a registration station (6) a registration request including a telecommunications address for later use and (b) to send to a receiving station (2) a message containing the telecommunications address and a security code;
(ii) a registration station (6) operable upon receipt of a registration request to allocate a security code to the address, to store a database entry containing the address and security code and to send the security code to the sending station (7) for inclusion in its message to the receiving station;
(iii) a receiving station (2) operable upon receipt of a message to send to a verification station (6) a verification request containing the telecommunications address and the security code; and
(iv) a verification station (6) operable upon receipt of a verification request to determine whether there is a database entry that matches the telecommunication address and security code contained in the request and if so, to send a clearance notification to the receiving station (2).

15. An apparatus for verifying messages sent over a telecommunications system comprising:
means operable upon receipt of a registration request including a telecommunications address for later use to allocate a security code to the address, to store a database entry containing the address and security code and to send the security code to the sender of the registration request; and
means operable upon receipt of a verification request containing the telecommunications address and the security code to determine whether there is a database entry that matches the telecommunication address and security code and if so, to send a clearance notification to the sender of the verification request.

16. A telecommunications station comprising:
means for receiving messages for display;
means selectively operable upon receipt of a message for display, which message contains a telecommunications address, to initiate communication with a station having that address; and
means operable upon receipt of a message for display which contains the telecommunications address and a security code to send to a verification station a verification request containing the telecommunications address and the security code and to disable said initiation of communication until receipt of a clearance notification from the verification station.

## Patentansprüche

1. Verfahren zum Verifizieren von Nachrichten, die über ein Telekommunikationssystem gesendet werden, wobei:
(a) eine Sendestation (7) zu einer Aufzeichnungsstation (6) eine Aufzeichnungsanforderung sendet, die eine Telekommunikationsadresse für eine spätere Verwendung enthält;
(b) die Aufzeichnungsstation (6) der Adresse einen Sicherheitscode zuweist, einen Datenbankeintrag, der die Adresse und den Sicherheitscode enthält, speichert und den Sicherheitscode zu der Sendestation (7) sendet;
(c) die Sendestation (7) zu einer Empfangsstation (2) eine Nachricht sendet, die die Telekommunikationsadresse und den Sicherheitscode enthält;
(d) die Empfangsstation (2) zu einer Verifikationsstation (6) eine Verifikationsanforderung sendet, die die Telekommunikationsadresse und den Sicherheitscode enthält;
(e) die Verifikationsstation (6) bestimmt, ob ein Datenbankeintrag vorhanden ist, der mit der Telekommunikationsadresse und mit dem Sicherheitscode übereinstimmt, und, wenn ja, zu der Empfangsstation (2) eine Löschmeldung sendet.

2. Verfahren nach einem der vorhergehenden Ansprüche, wobei das System ein Mobiltelephonnetz ist.

3. Verfahren nach einem der vorhergehenden Ansprüche, wobei die Empfangsstation ein Telephon ist.

4. Verfahren nach Anspruch 1 oder 2, wobei die Empfangsstation ein Computerendgerät ist.

5. Verfahren nach einem der vorhergehenden Ansprüche, wobei die Nachricht eine Textnachricht ist.

6. Verfahren nach einem der vorhergehenden Ansprüche, wobei die Telekommunikationsadresse eine Telephonnummer ist.

7. Verfahren nach einem der Ansprüche 1 bis 5, wobei die Telekommunikationsadresse eine Adresse von Daten, die in einem entfernten Server gespeichert sind, ist.

8. Verfahren nach einem der vorhergehenden Ansprüche, wobei die Aufzeichnungsstation und die Verifikationsstation ein und dieselbe Station sind.

9. Verfahren nach einem der vorhergehenden Ansprüche, wobei die Empfangsstation aus der Nachricht die Telekommunikationsadresse und den Sicherheitscode extrahiert und sie in die Verifikationsanforderung aufnimmt.

10. Verfahren nach einem der Ansprüche 1 bis 8, wobei die Empfangsstation eine Kopie der Nachricht in die Verifikationsanforderung aufnimmt.

11. Verfahren nach einem der vorhergehenden Ansprüche, wobei die Empfangsstation die Nachricht nur dann anzeigt, wenn sie eine Löschmeldung empfangen hat.

12. Verfahren nach einem der Ansprüche 1 bis 10, wobei die Empfangsstation die Nachricht anzeigt, jedoch den Beginn der Kommunikation mit einer der Telekommunikationsadresse entsprechenden Station nur zulässt, nachdem sie eine Löschmeldung empfangen hat.

13. Verfahren nach einem der Ansprüche 1 bis 10, wobei die Empfangsstation die Nachricht anzeigt, jedoch auf einen Versuch eines Anwenders der Empfangsstation, eine Kommunikation mit einer der Telekommunikationsadresse entsprechenden Station aufzubauen, bei Fehlen einer Löschmeldung mit dem Anzeigen einer Warnung antwortet.

14. Telekommunikationssystem, das umfasst:
(i) eine Sendestation (7), die betreibbar ist, um (a) zu einer Aufzeichnungsstation (6) eine Aufzeichnungsanforderung zu senden, die eine Telekommunikationsadresse zur späteren Verwendung enthält, und um (b) zu einer Empfangsstation (2) eine Nachricht zu senden, die die Telekommunikationsadresse und einen Sicherheitscode enthält;
(ii) eine Aufzeichnungsstation (6), die bei Empfang einer Aufzeichnungsanforderung betreibbar ist, um der Adresse einen Sicherheitscode zuzuweisen, um einen Datenbankeintrag, der die Adresse und den Sicherheitscode enthält, zu speichern und um den Sicherheitscode zu der Sendestation (7) zu senden, um ihn in ihre Nachricht zu der Empfangsstation aufzunehmen;
(iii) eine Empfangsstation (2), die bei Empfang einer Nachricht betreibbar ist, um zu einer Verifikationsstation (6) eine Verifikationsanforderung zu senden, die die Telekommunikationsadresse und den Sicherheitscode enthält; und
(iv) eine Verifikationsstation (6), die bei Empfang einer Verifikationsanforderung betreibbar ist, um zu bestimmen, ob ein Datenbankeintrag vorhanden ist, der mit der Telekommunikationsadresse und mit dem Sicherheitscode, die in der Anforderung enthalten sind, übereinstimmt, und um, wenn ja, eine Löschmeldung zu der Empfangsstation (2) zu senden.

15. Vorrichtung zum Verifizieren von Nachrichten, die über ein Telekommunikationsnetz gesendet werden, die umfasst:
Mittel, die bei Empfang einer Aufzeichnungsanforderung, die eine Telekommunikationsadresse zur späteren Verwendung enthält, betreibbar sind, um der Adresse einen Sicherheitscode zuzuweisen und um einen Datenbankeintrag, der die Adresse und den Sicherheitscode enthält, zu speichern und um den Sicherheitscode zu dem Sender der Anforderungsnachricht zu senden; und
Mittel, die bei Empfang einer Verifikationsanforderung, die die Telekommunikationsadresse und den Sicherheitscode enthält, betreibbar sind, um zu bestimmen, ob ein Datenbankeintrag vorhanden ist, der mit der Telekommunikationsadresse und mit dem Sicherheitscode übereinstimmt, und um, wenn ja, eine Löschmeldung zu dem Sender der Verifikationsanforderung zu senden.

16. Telekommunikationsstation, die umfasst:
Mittel zum Empfangen von anzuzeigenden Nachrichten;
Mittel, die wahlweise betreibbar sind, um bei Empfang einer Nachricht diese anzuzeigen, wobei die Nachricht eine Telekommunikationsadresse enthält, um eine Kommunikation mit einer Station, die die Adresse besitzt, zu beginnen; und
Mittel, die betreibbar sind, um bei Empfang einer Nachricht diese anzuzeigen, wobei die Nachricht die Telekommunikationsadresse und einen Sicherheitscode enthält, um zu einer Verifikationsstation eine Verifikationsanforderung zu senden, die die Telekommunikationsadresse und den Sicherheitscode enthält, und um den Beginn einer Kommunikation zu sperren, bis von der Verifikationsstation eine Löschmeldung empfangen wird.

## Revendications

1. Un procédé de vérification des messages envoyés sur un système de télécommunication dans lequel :
a) une station émettrice (7) transmet à une station d'enregistrement (6) une demande d'enregistrement, comprenant une adresse de télécommunication pour utilisation ultérieure ;
b) la station d'enregistrement (6) attribue un code de sécurité à l'adresse, met en mémoire une entrée de base de données contenant l'adresse et le code de sécurité et envoie le code de sécurité à la station émettrice (7) ;
c) la station émettrice (7) envoie à une station réceptrice (2) un message contenant l'adresse de télécommunication et le code de sécurité ;
d) la station réceptrice (2) envoie à une station de vérification (6) une demande de vérification contenant l'adresse de télécommunication et le code de sécurité ;
e) la station de vérification (6) détermine s'il existe une entrée de base de données qui correspond à l'adresse de télécommunication et le code de sécurité et si oui, envoie une notification d'autorisation à la station réceptrice (2).

2. Le procédé selon l'une quelconque des revendications précédentes dans lequel le système est un réseau de téléphonie mobile.

3. Le procédé selon l'une quelconque des revendications précédentes dans lequel la station réceptrice est un téléphone.

4. Le procédé selon la revendication 1 ou 2 dans lequel la station réceptrice est un terminal d'ordinateur.

5. Le procédé selon l'une quelconque des revendications précédentes dans lequel le message est un message de texte.

6. Le procédé selon l'une quelconque des revendications précédentes dans lequel l'adresse de télécommunication est un numéro de téléphone.

7. Le procédé selon l'une quelconque des revendications 1 à 5 dans lequel l'adresse de télécommunication est une adresse de données mémorisée sur un serveur distant.

8. Le procédé selon l'une quelconque des revendications précédentes dans lequel la station d'enregistrement et la station de vérification sont une seule et même station.

9. Le procédé selon l'une quelconque des revendications précédentes dans lequel la station réceptrice réalise l'extraction de l'adresse de télécommunication et du code de sécurité à partir du message et les incorpore dans la demande de vérification.

10. Le procédé selon l'une quelconque des revendications 1 à 8 dans lequel la station réceptrice inclut une copie du message dans la demande de vérification.

11. Le procédé selon l'une quelconque des revendications précédentes dans lequel la station réceptrice affiche le message seulement après qu'il a reçu une notification d'autorisation.

12. Le procédé selon l'une quelconque des revendications 1 à 10 dans lequel la station réceptrice affiche le message, mais permet l'ouverture de communication avec une station correspondant à l'adresse de télécommunication seulement après qu'il a reçu une notification d'autorisation.

13. Le procédé selon l'une quelconque des revendications 1 à 10 dans lequel la station réceptrice affiche le message, mais répond à une tentative par un utilisateur de la station réceptrice d'établir la communication avec une station correspondant à l'adresse de télécommunication en l'absence d'une notification d'autorisation en affichant un avertissement.

14. Un système de télécommunication comprenant:
(i) une station émettrice (7) pouvant fonctionner (a) pour transmettre à une station d'enregistrement (6) une demande d'enregistrement, comprenant une adresse de télécommunication pour utilisation ultérieure (b) et pour envoyer à une station réceptrice (2) un message contenant l'adresse de télécommunication et un code de sécurité ;
(ii) une station d'enregistrement (6) pouvant fonctionner suite à la réception d'une demande d'enregistrement pour attribuer un code de sécurité à l'adresse, pour mémoriser une entrée de base de données contenant l'adresse et le code de sécurité et pour envoyer le code de sécurité à la station émettrice (7) pour inclusion dans son message à la station réceptrice ;
(iii) une station réceptrice (2) pouvant fonctionner suite à la réception d'un message pour envoyer à une station de vérification (6) une demande de vérification contenant l'adresse de télécommunication et le code de sécurité, et
(iv) une station de vérification (6) pouvant fonctionner suite à la réception d'une demande de vérification pour déterminer s'il existe une entrée de base de données qui correspond à l'adresse de télécommunication et le code de sécurité contenus dans la demande et si oui, pour envoyer une notification d'autorisation à la station réceptrice (2).

15. Un appareil pour vérifier les messages envoyés par un système de télécommunication comprenant :
des moyens pouvant fonctionner, suite à la réception d'une demande d'enregistrement comprenant une adresse de télécommunication pour utilisation ultérieure, pour affecter un code de sécurité à l'adresse, pour mémoriser une entrée de base de données contenant l'adresse et le code de sécurité et pour envoyer le code de sécurité à l'expéditeur de la demande d'enregistrement ; et
des moyens pouvant fonctionner, suite à la réception d'une demande de vérification contenant l'adresse de télécommunication et le code de sécurité, pour déterminer s'il existe une entrée de base de données qui correspond à l'adresse de télécommunication et le code de sécurité et si oui, pour envoyer une notification d'autorisation à l'expéditeur de la demande de vérification.

16. Une station de télécommunication comprenant :
des moyens pour recevoir des messages pour affichage ;
des moyens pouvant être actionnés de manière sélective suite à la réception d'un message pour affichage, dont le message contient une adresse de télécommunication, pour amorcer une communication avec une station ayant cette adresse ;
des moyens pouvant être actionnés suite à la réception d'un message pour affichage qui contient l'adresse de télécommunication et un code de sécurité, afin d'envoyer à une station de vérification une demande de vérification contenant l'adresse de télécommunication et le code de sécurité et de désactiver ladite initiation de la communication jusqu'à la réception d'une notification d'autorisation de la station de vérification.
